# EUROPEAN PATENT APPLICATION

(11) **EP 4 123 409 A1**
(43) Date of publication of application: **25.01.2023**
(21) Application number: 22183629.9
(22) Date of filing: 07.07.2022
(51) Int. Cl.: G05D 1/02

(54) **AUTONOMOUS TRAVELING BODY**

(30) Priority: 20.07.2021 JP 2021119326; 27.04.2022 JP 2022073249
(71) Applicant: Murata Machinery, Ltd., Kyoto-shi, Kyoto 601-8326 (JP)
(72) Inventor: TANISAKA, Yoshiaki, Kyoto, 612-8686 (JP)
(74) Representative: Stöckeler, Ferdinand

(57) **Abstract**

The autonomous traveling body includes a vehicle body, a traveling part, an obstacle detector, a traveling controller, and a storage part. The traveling part causes the vehicle body to travel. The traveling controller controls the traveling part based on a detection result of the obstacle by the obstacle detector. The storage part stores an obstacle detection area set around the vehicle body. The obstacle detection area includes a stop area having a predetermined width with the traveling direction of the vehicle body as an axis, and first and second deceleration areas excluding the stop area. When at least a part of the obstacle is included in the stop area, the traveling controller stops the vehicle body. When at least a part of the obstacle is included in the first deceleration area or the second deceleration area, the traveling controller reduces the traveling speed of the vehicle body.

## Description

### BACKGROUND OF THE INVENTION

### 1. Field of the Invention

The present invention relates to an autonomous traveling body that autonomously moves in a predetermined movement area.

### 2. Description of the Related Art

As a type of autonomous traveling body, there is known a shelf check robot that monitors product display shelves of stores represented by convenience stores and supermarkets (e.g., see Japanese Unexamined Patent Publication No. 2020-98617). The shelf check robot monitors the product display shelf to check whether or not there is an abnormality in a display state of a product, and when there is an abnormality, an operator eliminates the abnormality in the display state of the product and performs product arrangement work and replenishment work. The autonomous traveling body has wheels for moving in a store or the like.

The autonomous traveling body autonomously moves in accordance with a traveling route generated in advance while estimating a self-position based on a moving distance calculated from the rotation amount of the wheel, map information on an area to be a target for moving (referred to as a movement target area), and map information on the periphery of the autonomous traveling body acquired by an external sensor or the like. In the autonomous traveling body, the traveling route for moving to the destination is generated so as to avoid an obstacle present in the map information on the movement target area.

A position at which an obstacle is present in the movement target area may change from moment to moment. For example, an obstacle that is not present when the map information on the movement target area is acquired may be present when the autonomous traveling body moves autonomously.

In addition, even when the autonomous traveling body is autonomously moving in accordance with the previously generated traveling route in advance in calculation, the autonomous traveling body may be actually autonomously moving in a position deviating from the traveling route.

One of factors that cause the autonomous mobile body to move in a position deviating from the planned traveling route is an error in self-position estimation in the autonomous mobile body. The self-position estimation is performed based on the rotation amount of the wheel, the map information on the movement target area, and the map information on the periphery of the autonomous traveling body, but an error may occur between an actual position and an estimated self-position due to slippage of the wheel in the movement target area, noise of a sensor, and the like.

As another factor, there is a case where the autonomous mobile body moves in a position deviating from the planned traveling route due to slippage of the wheel in the movement target area.

As described above, in at least one of a case where a new obstacle is detected during autonomous movement and a case where the autonomous traveling body autonomously moves out of the traveling route generated in advance, there is a possibility that the autonomous mobile body moving autonomously will collide with the obstacle even when the route is planned in advance so as to avoid the obstacle. Therefore, even during the autonomous movement, an obstacle present around the autonomous traveling body is detected, and it is determined whether or not the autonomous traveling body moving autonomously will collide with the detected obstacle. This determination is made based on whether or not a model representing the autonomous traveling body and the detected obstacle interferes with each other. When the model representing the autonomous traveling body and the detected obstacle interfere with each other, it is determined that the obstacle and the autonomous traveling body will collide with each other.

The model of the autonomous traveling body is defined as an area representing a range obtained by adding a predetermined margin to the autonomous traveling body. That is, the model of the autonomous traveling body is defined as an area larger than the autonomous traveling body. In the conventional autonomous traveling body, when a model of the autonomous traveling body and an obstacle interfere with each other, it is determined that the obstacle and the autonomous traveling body will collide with each other regardless of the distance and positional relationship between the obstacle and the autonomous traveling body. Thus, for example, even when the model of the autonomous traveling body interferes with the obstacle but the autonomous traveling body does not actually collide with the obstacle, it is determined that the obstacle and the autonomous traveling body will collide with each other, and the autonomous traveling body is stopped. That is, conventionally, the autonomous traveling body stops even when the autonomous traveling body can autonomously move without colliding with the obstacle.

### BRIEF SUMMARY OF THE INVENTION

An object of the present invention is to continue the movement of the autonomous traveling body as much as possible.

Hereinafter, a plurality of aspects will be described as means for solving the problem. These aspects can be combined in a freely selected manner as required.

An autonomous traveling body according to one aspect of the present invention includes a vehicle body, a traveling part, an obstacle detector, a traveling controller, and a storage part.

The traveling part causes the vehicle body to travel. The obstacle detector detects an obstacle around the vehicle body. The traveling controller controls the traveling part based on a detection result of the obstacle by the obstacle detector. The storage part stores an obstacle detection area set around the vehicle body. The obstacle detection area includes a stop area having a predetermined width with the traveling direction of the vehicle body as an axis, and a deceleration area excluding the stop area.

When at least a part of the obstacle detected by the obstacle detector is included in the stop area, the traveling controller stops the vehicle body.

On the other hand, when at least a part of the obstacle detected by the obstacle detector is included in the deceleration area, the traveling controller reduces the traveling speed of the vehicle body.

In the autonomous traveling body described above, the stop area and the deceleration area excluding the stop area are set in an obstacle detection area used for determining whether or not the obstacle detected by an obstacle detector is close to the vehicle body.

The stop area is defined as an area having a predetermined width with the traveling direction of the vehicle body as an axis. That is, the fact that at least a part of the obstacle is included in the stop area means that the obstacle is present in front of the autonomous traveling body in the traveling direction. In this case, when the autonomous traveling body keeps moving without change, the autonomous traveling body will collide with the obstacle, and hence the traveling controller performs control to stop the vehicle body.

On the other hand, the fact that at least a part of the obstacle is included only in the deceleration area means that the obstacle is not present in front of the autonomous traveling body in the traveling direction. In this case, even when the autonomous traveling body keeps moving without change, the autonomous traveling body will merely come close to the obstacle and will not collide with the obstacle, and hence the traveling controller performs control for reducing the traveling speed of the vehicle body.

As described above, the autonomous traveling body stops only when having a high risk of colliding with the obstacle, and can continue to move when merely coming close to the obstacle and having a low risk of colliding with the obstacle.

The traveling controller may stop the vehicle body when at least a part of the obstacle detected by the obstacle detector is included in both the stop area and the deceleration area. Thereby, the autonomous traveling body stops when the risk of colliding with the obstacle is high. This is because the fact that at least a part of the obstacle detected by the obstacle detector is included in both the stop area and the deceleration area means that a part of the obstacle is present in front of the autonomous traveling body in the traveling direction. Thus, when the autonomous traveling body keeps moving without change, the autonomous traveling body will collide with a part of the obstacle.

The traveling controller may reduce the traveling speed of the vehicle body more as the obstacle detected by the obstacle detector is located closer to the vehicle body in the deceleration area. As a result, the autonomous traveling body can be moved safely.

The predetermined width may be equivalent to the width of the vehicle body. Accordingly, it is possible to appropriately determine whether or not any portion of the vehicle body will collide with at least a part of the obstacle.

An autonomous traveling body according to another aspect of the present invention includes a vehicle body, a traveling part, an obstacle detector, a traveling controller, and a storage part.

The traveling part causes the vehicle body to travel. The obstacle detector detects an obstacle around the vehicle body. The traveling controller controls the traveling part based on a detection result of the obstacle by the obstacle detector. The storage part stores an obstacle detection area set around the vehicle body.

When at least a part of the obstacle detected by the obstacle detector is included in the obstacle detection area, the traveling controller reduces the traveling speed of the vehicle body.

On the other hand, when at least a part of the obstacle detected by the obstacle detector is located within a predetermined width with the traveling direction of the vehicle body as an axis, the traveling controller stops the vehicle body.

In the autonomous traveling body described above, the traveling controller determines whether at least a part of the obstacle detected by the obstacle detector is included in the obstacle detection area set around the vehicle body or is located in an area within the predetermined width with the traveling direction of the vehicle body as the axis in the obstacle detection area.

The fact that at least a part of the obstacle detected by the obstacle detector is located in the area within the predetermined width with the traveling direction of the vehicle body as the axis in the obstacle detection area means that the obstacle is present in front of the autonomous traveling body in the traveling direction when the autonomous traveling body moves to the vicinity of the obstacle. In this case, when the autonomous traveling body keeps moving without change, the autonomous traveling body will collide with the obstacle, and hence the traveling controller performs control to stop the vehicle body.

On the other hand, the fact that at least a part of the obstacle is included in an area excluding the area within the predetermined width means that the obstacle is not present in front of the autonomous traveling body in the traveling direction when the autonomous traveling body moves to the vicinity of the obstacle. In this case, even when the autonomous traveling body keeps moving without change, the autonomous traveling body will merely come close to the obstacle and will not collide with the obstacle, and hence the traveling controller performs control for reducing the traveling speed of the vehicle body.

As described above, the autonomous traveling body stops only when having a high risk of colliding with the obstacle, and can continue to move when merely coming close to the obstacle and having a low risk of colliding with the obstacle.

The predetermined width may be equivalent to the width of the vehicle body. Accordingly, it is possible to appropriately determine whether or not any portion of the vehicle body will collide with at least a part of the obstacle.

An autonomous traveling body according to still another aspect of the present invention includes a vehicle body, a traveling part, an obstacle detector, a traveling controller, and a storage part.

The traveling part causes the vehicle body to travel. The obstacle detector detects an obstacle around the vehicle body. The traveling controller controls the traveling part based on a detection result of the obstacle by the obstacle detector. The storage part stores a deceleration area set around the vehicle body and a stop area that is an area within a predetermined width with the traveling direction of the vehicle body as an axis and does not overlap with the deceleration area.

When at least a part of the obstacle detected by the obstacle detector is included in the stop area, the traveling controller stops the vehicle body.

On the other hand, when at least a part of the obstacle detected by the obstacle detector is included in the deceleration area, the traveling controller reduces the traveling speed of the vehicle body.

In the autonomous traveling body described above, the traveling controller determines whether at least a part of the obstacle detected by the obstacle detector is included in the deceleration area set around the vehicle body or included in the stop area that is the area within the predetermined width with the traveling direction of the vehicle body as the axis and does not overlap the deceleration area.

The fact that at least a part of the obstacle detected by the obstacle detector is included only in the deceleration area set around the vehicle body means that the obstacle is not present in front of the autonomous traveling body in the traveling direction when the autonomous traveling body moves to the vicinity of the obstacle. In this case, even when the autonomous traveling body keeps moving without change, the autonomous traveling body will merely come close to the obstacle and will not collide with the obstacle, and hence the traveling controller performs control for reducing the traveling speed of the vehicle body.

On the other hand, the fact that at least a part of the obstacle is included in the stop area means that the obstacle is present in front of the autonomous traveling body in the traveling direction when the autonomous traveling body moves to the vicinity of the obstacle. In this case, when the autonomous traveling body keeps moving without change, the autonomous traveling body will collide with the obstacle, and hence the traveling controller performs control to stop the vehicle body.

As described above, the autonomous traveling body stops only when having a high risk of colliding with the obstacle, and can continue to move when merely coming close to the obstacle and having a low risk of colliding with the obstacle.

The predetermined width may be equivalent to the width of the vehicle body. Accordingly, it is possible to appropriately determine whether or not any portion of the vehicle body will collide with at least a part of the obstacle.

An autonomous traveling body according to still another aspect of the present invention autonomously moves in a predetermined movement area. The autonomous traveling body includes a vehicle body, a storage part, an obstacle detector, and a traveling controller.

The storage part stores an obstacle detection area set around the vehicle body.

The obstacle detector detects an obstacle present around the vehicle body. The traveling controller controls the traveling of the vehicle body.

The traveling controller plans an autonomous movement route from a movement start position to a movement end position in a predetermined movement area so as to avoid an obstacle present between the movement start position and the movement end position with a predetermined margin between the obstacle and the vehicle body.

Further, the traveling controller performs the following control during autonomous movement in which autonomous movement is performed in accordance with the autonomous movement route while the obstacle detector detects an obstacle present around the vehicle body.
⊚ At a predetermined point on a future autonomous movement route where the vehicle body will move from now on, even though it is determined that no obstacle is present around the vehicle body, when at least a part of an obstacle present around the vehicle body is included in a predetermined width area within a predetermined width with a traveling direction of the vehicle body as an axis in the obstacle detection area at the time of determination that the vehicle body has arrived at the predetermined point, the traveling controller stops the vehicle body.
⊚ When at least a part of an obstacle present around the vehicle body is included in an area excluding the predetermined width area in the obstacle detection area at the time of determination that the vehicle body has arrived at the predetermined point, the traveling controller reduces a traveling speed of the vehicle body.

In the autonomous traveling body described above, the traveling controller plans, as an autonomous movement route from a movement start position to a movement end position in a predetermined movement area, a route to avoid an obstacle present between the movement start position and the movement end position with a predetermined margin between the obstacle and the vehicle body. The fact that this autonomous movement route is planned means that the autonomous traveling body can autonomously move safely without colliding with an obstacle.

Further, in the autonomous traveling body described above, the traveling controller controls the traveling of the autonomous traveling body based on the positional relationship between the obstacle detected by the obstacle detector and the obstacle detection area set around the vehicle body during the autonomous movement in which autonomous movement is performed in accordance with the planned autonomous movement route while the obstacle detector detects the obstacle present around the vehicle body.

Specifically, at a predetermined point on a future autonomous movement route where the vehicle body will move from now on, even though it is determined that no obstacle is present around the vehicle body, when at least a part of an obstacle present around the vehicle body is included in a predetermined width area within a predetermined width with a traveling direction of the vehicle body as an axis in the obstacle detection area at the time of determination that the vehicle body has arrived at the predetermined point, the traveling controller stops the vehicle body. This is because the fact that at least a part of the obstacle is included in the predetermined width area means that the obstacle is present in front of the autonomous traveling body in the traveling direction, and the autonomous traveling body will collide with the obstacle when keeping moving without change.

On the other hand, when at least a part of an obstacle present around the vehicle body is included in an area excluding the predetermined width area in the obstacle detection area at the time of determination that the vehicle body has arrived at the predetermined point, the traveling controller reduces a traveling speed of the vehicle body. This is because the fact that at least a part of the obstacle is included in the area excluding the predetermined width area means that the obstacle is not present in front of the autonomous traveling body in the traveling direction, and even when the autonomous traveling body keeps moving without change, the autonomous traveling body will merely come close to the obstacle and will not collide with the obstacle.

As described above, even though an autonomous movement route enabling safe avoidance of an obstacle has been planned, for example, when the autonomous traveling body moves in a position deviating from the autonomous movement route and unexpectedly approaches the obstacle and the obstacle detector detects the obstacle around the vehicle body, and when the presence of the obstacle is unexpectedly recognized on a future route, the autonomous traveling body stops only in the case of a high risk of colliding with the obstacle, and can continue to move in the case of merely coming close to the obstacle and having a low risk of colliding with the obstacle.

The predetermined width may be equivalent to the width of the vehicle body. Accordingly, it is possible to appropriately determine whether or not any portion of the vehicle body will collide with at least a part of the obstacle.

When the traveling speed of the vehicle body is to be reduced, the traveling controller may reduce the traveling speed of the vehicle body more as the distance between the vehicle body and the obstacle is shorter. As a result, the autonomous traveling body can be moved safely.

The autonomous traveling body stops only when having a high risk of colliding with the obstacle, and can continue to move when merely coming close to the obstacle and having a low risk of colliding with the obstacle.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a diagram illustrating an example of a layout of a movement area;
FIG. 2 is a perspective view (part 1) of an autonomous traveling body;
FIG. 3 is a perspective view (part 2) of an autonomous traveling body;
FIG. 4 is a schematic side view of the autonomous traveling body;
FIG. 5 is a diagram illustrating a functional block configuration of a controller;
FIG. 6 is a diagram illustrating a definition of an obstacle detection area;
FIG. 7 is a flowchart illustrating an autonomous movement operation;
FIG. 8 is a diagram illustrating an example of a case where obstacle information is not included in the obstacle detection area;
FIG. 9 is a diagram schematically illustrating a method for determining whether or not an obstacle is present on a future route;
FIG. 10 is a diagram illustrating an example of a case where the obstacle information is included in a stop area;
FIG. 11 is a diagram illustrating an example of a case where the obstacle information is included in a second deceleration area; and
FIG. 12 is a diagram illustrating an example of a case where the obstacle information is included in a first deceleration area.

### DETAILED DESCRIPTION OF PREFERRED EMBODIMENTS

### 1. First Embodiment

### (1) Movement area

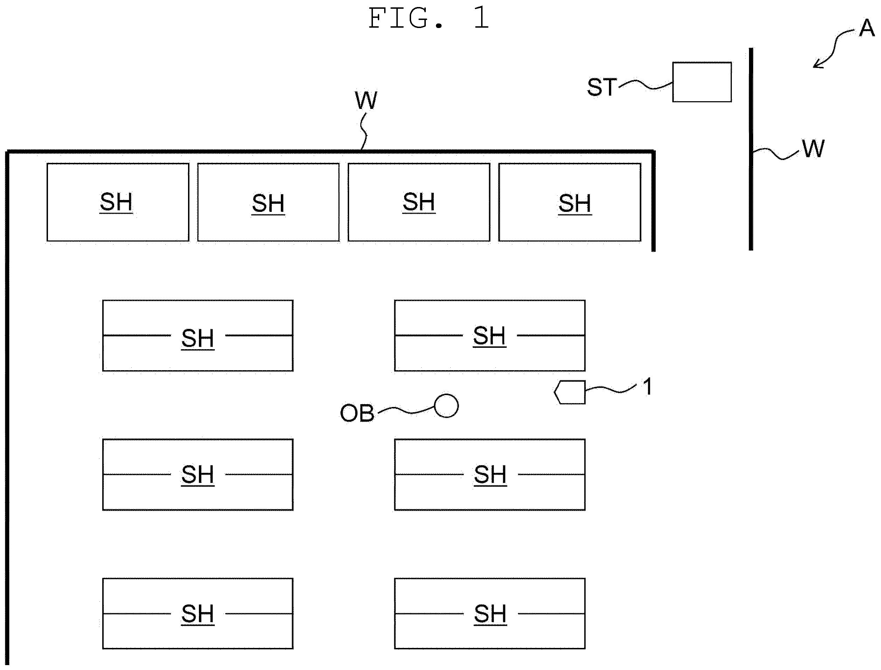

Hereinafter, an autonomous traveling body 1 will be described. First, a movement area where the autonomous traveling body 1 moves will be described with reference to FIG. 1. FIG. 1 is a diagram illustrating an example of a layout of a movement area. The movement area A is inside a retail store represented by a convenience store or a supermarket. The movement area A includes a wall W and product display shelves SH. The wall W is a wall separating the movement area A. The product display shelves SH are shelves that are arranged side by side in the movement area A and on which products and the like are placed. Further, in the movement area A, a charging station ST for charging the autonomous traveling body 1 is provided.

The autonomous traveling body 1 of the present embodiment monitors the states of the product display shelves SH while autonomously moving along the product display shelves SH arranged in the movement area A. The autonomous traveling body 1 is called a shelf check robot.

As illustrated in FIG. 1, an obstacle OB may be disposed in the movement area A. The obstacle OB is disposed, for example, when the layout of the product display shelves SH is changed. In the movement area A, the type, size, placement position, and the like of the obstacle OB may change from moment to moment. Therefore, the autonomous traveling body 1 of the present embodiment is controlled so as to autonomously move without colliding with the obstacle OB even when the placement or the like of the obstacle OB in the movement area A changes. When the autonomous traveling body 1 does not collide with the obstacle OB even though coming close to the obstacle OB, the autonomous traveling body 1 is controlled so as to continue to move as much as possible.

Even when the autonomous traveling body 1 deviates from the planned route during the autonomous movement and approaches the obstacle OB, the autonomous traveling body 1 is controlled so as to be able to continue the autonomous movement unless colliding with the obstacle OB.

### (2) Basic structure of autonomous traveling body

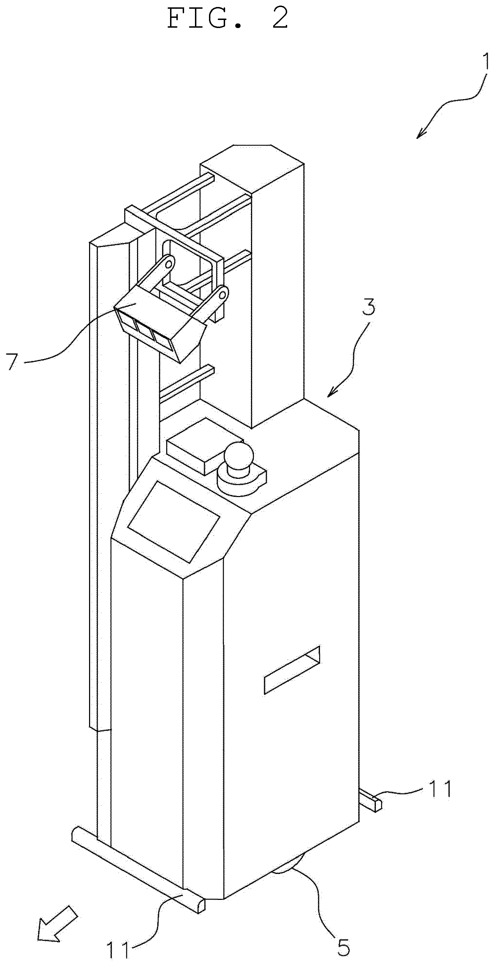

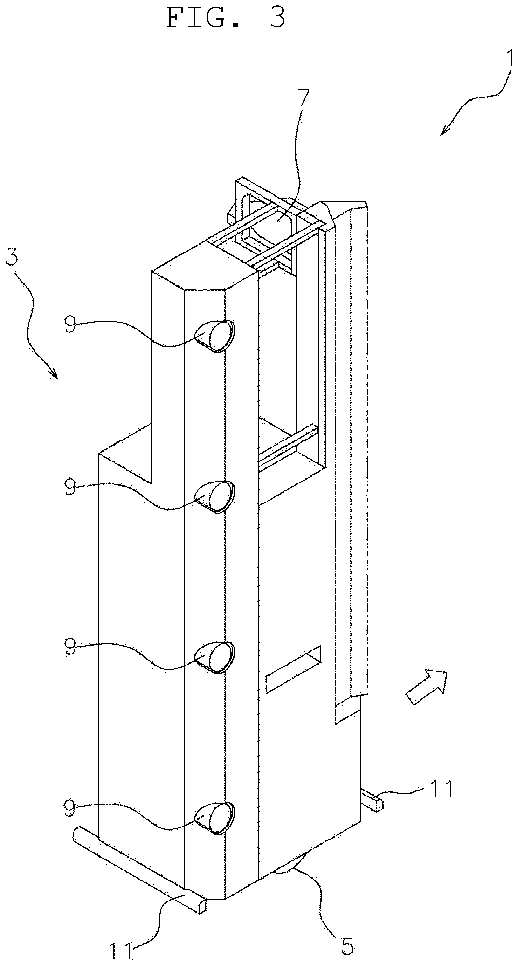

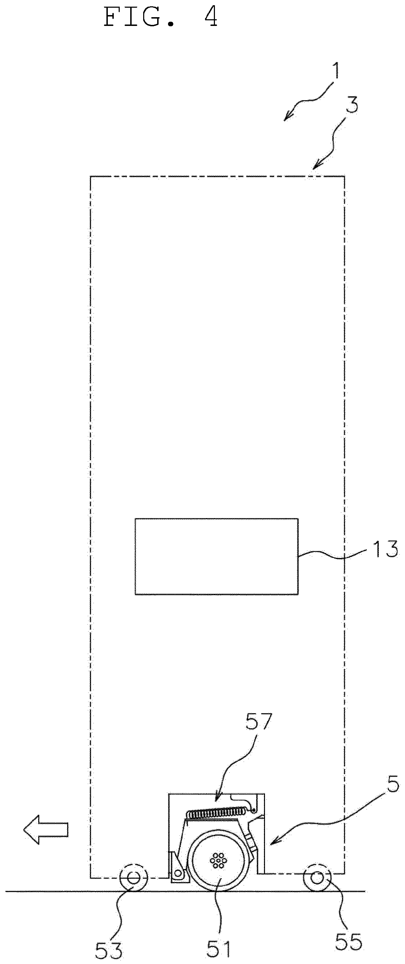

Next, a basic structure of the autonomous traveling body 1 will be described with reference to FIGS. 2 to 4. FIGS. 2 and 3 are perspective views of the autonomous traveling body. FIG. 4 is a schematic side view of the autonomous traveling body. In the drawing, a white arrow indicates the moving direction of the autonomous traveling body 1.

The autonomous traveling body 1 includes a vehicle body 3. The vehicle body 3 is relatively tall, and specifically, its length in the height direction is three times or more its length in the traveling direction.

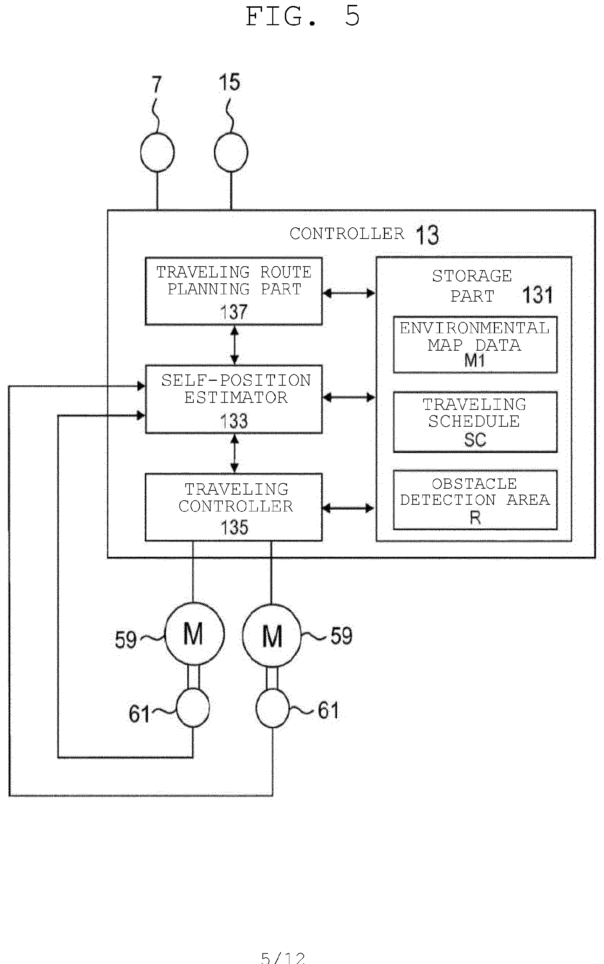

The autonomous traveling body 1 includes a traveling part 5. The traveling part 5 causes the vehicle body 3 to travel. The traveling part 5 includes a driving wheel 51, a front driven wheel 53, a rear driven wheel 55, and a driving wheel support structure 57. The driving wheel 51 is provided in a lower portion of the vehicle body 3. Specifically, the driving wheels 51 are a pair of right and left wheels and are provided at a center portion in the traveling direction of the lower portion of the vehicle body 3. Each driving wheel 51 is driven by a motor 59 (FIG. 5) and a deceleration mechanism (not illustrated). As an example, the motor and the deceleration mechanism are directly connected to each driving wheel 51.

The front driven wheel 53 and the rear driven wheel 55 are provided in the lower portion of the vehicle body 3. The front driven wheels 53 are provided on the front side in the traveling direction with respect to the driving wheel 51 and are a pair of left and right wheels. The rear driven wheels 55 are provided on the rear side in the traveling direction with respect to the driving wheel 51 and are a pair of left and right wheels. The driving wheel support structure 57 is a structure that supports the driving wheel 51 so as to be movable with a suspension in a predetermined vertical range.

The autonomous traveling body 1 includes an obstacle detector 7. The obstacle detector 7 is provided at a relatively high position on the front side in the traveling direction of the vehicle body 3. The obstacle detector 7 detects the obstacle OB present around the vehicle body 3. The obstacle detector 7 acquires, as information on the detected obstacle OB, the distance between the obstacle detector 7 and the obstacle OB and a direction in which the obstacle OB is present as viewed from the obstacle detector 7. The obstacle detector 7 is, for example, a time-of-flight (TOF) camera.

The autonomous traveling body 1 includes a plurality of cameras 9. The plurality of cameras 9 are attached at predetermined intervals in the height direction of the vehicle body 3 to capture images of the product display shelf SH. Specifically, the plurality of cameras 9 are provided on one side surface of the vehicle body 3 and face the horizontal direction. The captured images are subjected to image processing by the controller. As a result, the controller can check an expiration date, a selling price, a lack of stock, and the like of a point of purchase (POP) advertisement.

The autonomous traveling body 1 has bumper switches 11 in front of and behind the traveling direction in the lowermost portion of the vehicle body 3.

The autonomous traveling body 1 includes a controller 13. The controller 13 is a computer system that includes a central processing unit (CPU), a storage device (e.g., random-access memory (RAM), read-only memory (ROM), solid-state drive (SSD), hard disk, etc.), a network interface, various input/output interfaces, and the like and controls the autonomous traveling body 1. Note that a part or the entire controller 13 may include a system-on-chip (SoC). The controller 13 is disposed inside the vehicle body 3.

The autonomous traveling body 1 includes an object detection sensor 15 (FIG. 5) in a lower portion of the vehicle body 3. The object detection sensor 15 generates local map data representing the placement of an obstacle present around the vehicle body 3.

The object detection sensor 15 acquires a point cloud representing the obstacle OB present around the vehicle body 3 as a detection result of the obstacle OB. The point cloud representing the obstacle OB present around the vehicle body 3 is map information (referred to as local map data) representing the placement position of the obstacle OB around the vehicle body 3. Each point of the point cloud representing the obstacle OB is represented by, for example, a distance from the object detection sensor 15 to the point and an angle at which the point is present. In addition, each point may be represented as a coordinate value. The object detection sensor 15 is, for example, a laser range finder.

In the present embodiment, the detection of the obstacle OB present around the vehicle body 3 is realized by adding the detection result of the obstacle OB by the obstacle detector 7 and the detection result of the obstacle OB by the object detection sensor 15. That is, the object detection sensor 15 functions as another obstacle detector. Specifically, the obstacle detector 7 mainly detects an obstacle OB at a relatively high position (e.g., an obstacle extending downward from a ceiling), and the object detection sensor 15 mainly detects an obstacle OB at a relatively low position (e.g., a short obstacle placed on a floor surface).

### (3) Functional block configuration of controller

A functional block configuration of the controller 13 will be described with reference to FIG. 5. FIG. 5 is a diagram illustrating a functional block configuration of a controller. Some or all of functional blocks described below may be realized by a computer program that can be executed by a computer system constituting the controller 13 or may be realized as hardware. When the functional block is realized by a computer program, the computer program is stored in a storage device of the controller 13.

The controller 13 includes a storage part 131, a self-position estimator 133, a traveling controller 135, and a traveling route planning part 137.

The storage part 131 stores various data necessary for controlling the autonomous traveling body 1. The storage part 131 stores environmental map data M1, a traveling schedule SC (an example of a planned route), and an obstacle detection area R.

The environmental map data M1 is map information representing the movement area A. The environmental map data M1 is created using, for example, local map data obtained when the autonomous traveling body 1 moves in the movement area A. In addition, the environmental map data M1 may be created from computer-aided design (CAD) data representing the layout of the movement area A.

The traveling schedule SC is data representing a route along which the autonomous traveling body 1 is desired to be autonomously moved in the movement area A. As will be described later, the traveling schedule SC is planned as a route enabling autonomous movement and safe avoidance of the obstacle OB from the movement start position to the movement end position.

The traveling schedule SC includes a plurality of passing points through which the autonomous traveling body 1 passes. The passing points are represented, for example, as coordinate values in a coordinate system (an example of a predetermined coordinate system) defining an environmental map data M1. Each passing point of the traveling schedule SC is associated with an attitude angle of the vehicle body 3 at each passing point. The attitude angle of the vehicle body 3 is an angle formed by the traveling direction of the vehicle body 3 and a predetermined reference axis. That is, the attitude angle represents the traveling direction of the vehicle body 3. Further, each passing point of the traveling schedule SC may be associated with a moving speed at the time of passing through each passing point.

The obstacle detection area R is used to determine whether or not the obstacle OB detected by at least one of the obstacle detector 7 and the object detection sensor 15 is close to the vehicle body 3. The obstacle detection area R is used to determine in what positional relationship the detected obstacle OB is close to the vehicle body 3.

The self-position estimator 133 estimates the self-position of the autonomous traveling body 1. The self-position estimator 133 estimates the self-position of the autonomous traveling body 1 based on the rotation amount of the driving wheel 51 from the last-time self-position estimation to the present, the environmental map data M1 stored in the storage part 131, and the local map data acquired by the object detection sensor 15. The estimated self-position is expressed as a coordinate value of the coordinate system defining the environmental map data M1. The rotation amount of the driving wheel 51 can be acquired by, for example, an encoder 61 that counts the number of rotations of the output rotary shaft of the motor 59.

Specifically, self-position estimator 133 first estimates the self-position of autonomous traveling body 1 based on the rotation amount of driving wheel 51. The current attitude angle of the vehicle body 3 is estimated based on the attitude angle of the vehicle body 3 estimated in the last self-position estimation and the rotation amount of the driving wheel 51. The attitude angle of the vehicle body 3 is an angle formed by the current traveling direction of the vehicle body 3 and the predetermined reference axis.

Next, the self-position estimator 133 disposes the local map data at each of a plurality of candidate positions in the vicinity of the position estimated based on the rotation amount of the driving wheel 51 on the environmental map data M1. At each candidate position, the local map data is rotated by a plurality of candidate angles set in the vicinity of the attitude angle estimated based on the rotation amount of the driving wheel 51.

Thereafter, the degree of coincidence between the rotated local map data disposed at each candidate position and the environmental map data M1 is evaluated. Among the plurality of candidate positions, the candidate position where the local map data having the highest degree of coincidence with the environmental map data M1 is disposed is estimated as the current self-position. Among the plurality of candidate angles, a candidate angle (i.e., the rotation angle of the local map data) when the rotated local map data most coincides with the environmental map data M1 is estimated as the current attitude angle of the vehicle body 3.

For example, when the degree of coincidence between the environmental map data M1 and the local map data cannot be appropriately evaluated because at least one of the environmental map data M1 and the local map data is monotonous, the self-position estimator 133 may estimate the self-position based only on the rotation amount of the driving wheel 51.

The traveling controller 135 controls the rotation of the motor 59 and thereby controls the traveling of the vehicle body 3. Specifically, at the time of performing the autonomous movement, the traveling controller 135 calculates a traveling command for causing the vehicle body 3 to travel from the current self-position estimated by the self-position estimator 133 to the next target point of the traveling schedule SC, and controls the motor 59 based on the traveling command.

The autonomous traveling body 1 is also movable by a user's operation. In this case, the traveling controller 135 controls the traveling of the vehicle body 3 in accordance with the user's operation. The user can operate the autonomous traveling body 1 by using, for example, a joystick, a remote controller, or the like.

When at least one of the obstacle detector 7 and the object detection sensor 15 detects the obstacle OB at the time of performing the autonomous movement, the traveling controller 135 controls the traveling of the vehicle body 3 based on which area of the obstacle detection area R the detected obstacle OB is included.

The traveling route planning part 137 generates the traveling schedule SC. The traveling route planning part 137 plans a route (referred to as an autonomous movement route) enabling autonomous movement and avoidance of the obstacle OB from the movement start position to the movement end position, and the traveling route planning part 137 generates the traveling schedule SC from the planned autonomous movement route.

### (4) Obstacle detection area

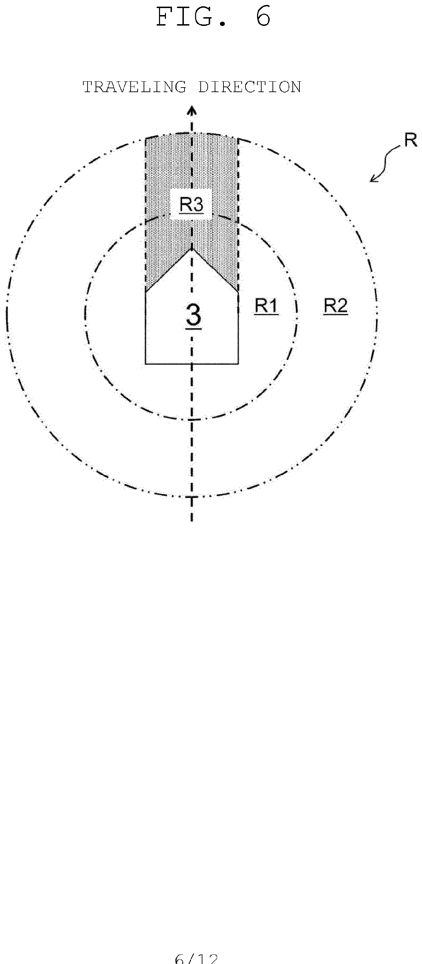

The configuration of the obstacle detection area R will be described with reference to FIG. 6. FIG. 6 is a diagram illustrating the definition of the obstacle detection area. The obstacle detection area R is an area where it is determined that the obstacle OB and the vehicle body 3 are close to each other when at least a part of the obstacle OB detected by at least one of the obstacle detector 7 and the object detection sensor 15 is included in this area. In the present embodiment, the obstacle detection area R is defined as an area in a circle centered on the vehicle body 3 and including the vehicle body 3.

The shape of the obstacle detection area R is not limited to a circular shape so long as the obstacle detection area R includes the vehicle body 3. For example, the shape may be an elliptical shape, a similar shape of the vehicle body 3, or the like.

The obstacle detection area R includes a first deceleration area R1 and a second deceleration area R2. The first deceleration area R1 is a concentric circle of the obstacle detection area R and is defined as an area in a circle having a radius smaller than that of the obstacle detection area R. The second deceleration area R2 is defined as an area between the boundary of the first deceleration area R1 and the boundary of the obstacle detection area R. That is, the second deceleration area R2 is set outside the first deceleration area R1 with respect to the vehicle body 3.

Therefore, when at least a part of the obstacle OB is included in the first deceleration area R1, it is determined that the obstacle OB and the vehicle body 3 are closest to each other. On the other hand, when at least a part of the obstacle OB is included in the second deceleration area R2, it is determined that the obstacle OB and the vehicle body 3 are close to each other with a certain distance.

Obstacle detection area R includes a stop area R3 (an example of a predetermined width area). The stop area R3 is an area having a predetermined width with the traveling direction of the vehicle body 3 as an axis in the first deceleration area R1 and the second deceleration area R2. As illustrated in FIG. 6, the predetermined width of the stop area R3 is defined to be the same as the width of the vehicle body 3. That is, the stop area R3 is defined as an area having the same width as the width of the vehicle body 3 and extending in the traveling direction of the vehicle body 3 in the first deceleration area R1 and the second deceleration area R2.

Therefore, when at least a part of the obstacle OB is included in the stop area R3, it is determined that the obstacle OB is close to the vehicle body 3 and is present in front of the vehicle body 3.

### (5) Autonomous movement operation of autonomous traveling body

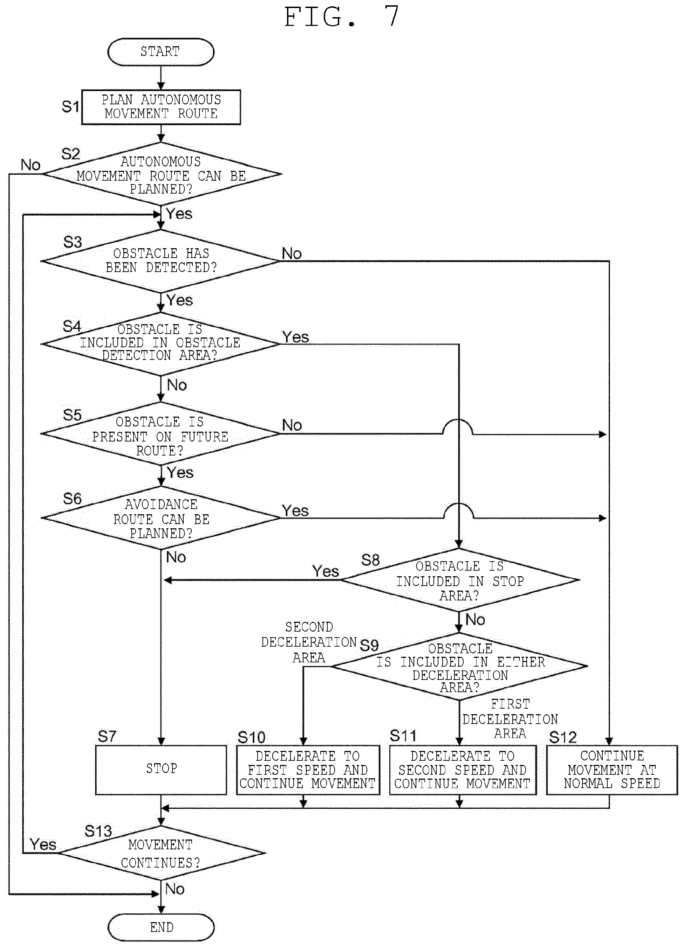

An operation when the autonomous traveling body 1 having the above configuration autonomously moves will be described with reference to FIG. 7. FIG. 7 is a flowchart illustrating an autonomous movement operation.

First, in step S1, the traveling route planning part 137 plans an autonomous movement route and generates a traveling schedule SC from the autonomous movement route.

Specifically, the traveling route planning part 137 determines a movement start position and a movement end position in the environmental map data M1 stored in the storage part 131 and plans a route for avoiding the obstacle OB present between the movement start position and the movement end position in the environmental map data M1 without causing the autonomous traveling body 1 to make a sudden turn. More specifically, for example, the traveling route planning part 137 disposes a model defined as an area obtained by adding a predetermined margin to the vehicle body 3 on the environmental map data M1 and plans a route in which the model does not interfere with the obstacle OB on the environmental map data M1 and avoids the obstacle OB without making a sudden turn. In this way, it is possible to plan an autonomous movement route enabling avoidance of the obstacle OB present between the movement start position and the movement end position with a predetermined margin with respect to the vehicle body 3.

After planning the route, the traveling route planning part 137 sets a plurality of passing points on the planned route, converts the plurality of passing points into coordinate values of a coordinate system defining the environmental map data M1, and records the coordinate values in the traveling schedule SC. Further, the traveling route planning part 137 records attitude angles of the vehicle body 3 at the respective passing points in association with the respective passing points recorded in the traveling schedule SC.

When the traveling route planning part 137 cannot plan the autonomous movement route in step S1 ("No" in step S2), the traveling controller 135 determines that it is impossible to perform the autonomous movement while safely avoiding the obstacle OB from the movement start position to the movement end position, and ends the autonomous movement operation.

On the other hand, when the traveling route planning part 137 is able to plan an autonomous movement route in step S1 described above ("Yes" in step S2), the traveling controller 135 determines that it is possible to perform the autonomous movement while safely avoiding the obstacle OB from the movement start position to the movement end position, and by the user's command or the like, the traveling route planning part 137 starts the control of the motor 59 in accordance with the traveling schedule SC generated in step S1. Thereby, the autonomous traveling body 1 autonomously moves in accordance with the traveling schedule SC (i.e., autonomous movement route).

As described above, the traveling schedule SC is generated as a route for avoiding the obstacle OB that was present in the movement area A at the time of generation of the environmental map data M1. Thus, when a new obstacle OB is detected during the autonomous movement, there is a possibility that the autonomous traveling body 1 will collide with the new obstacle OB when moving in accordance with the traveling schedule SC.

An error may occur between the estimated self-position and the actual position due to slippage between the driving wheel 51 and the floor surface of the movement area A, noise included in data obtained by the object detection sensor 15, or the like. Even when the traveling controller 135 is controlling the motor 59 in accordance with the traveling schedule SC, the autonomous traveling body 1 may move out of the planned traveling schedule SC (autonomous movement route) caused by slippage between the driving wheels 51 and the floor surface of the movement area A.

Even when the autonomous traveling body 1 is autonomously moving in accordance with the traveling schedule SC in calculation in the controller 13, the autonomous traveling body 1 may be actually autonomously moving out of the planned route due to factors such as the error in the self-position estimation and the autonomous movement of the autonomous traveling body 1 out of the autonomous movement route caused by slippage between the driving wheel 51 and the floor surface. In this case, there is a possibility that the autonomous traveling body 1 moving autonomously will come closer to the obstacle OB than assumed at the time of route planning and collide with the obstacle OB.

Therefore, in the autonomous traveling body 1, during the autonomous movement operation, the obstacle detector 7 and the object detection sensor 15 detect the obstacle OB present in the traveling direction of the autonomous traveling body 1. When at least one of the obstacle detector 7 and the object detection sensor 15 detects the obstacle OB during the autonomous movement operation, a movement policy for the autonomous traveling body 1 is determined based on whether or not the obstacle OB is included in the obstacle detection area R, and if so, at what position.

Specifically, in step S3, it is determined whether or not the obstacle OB has been detected in the traveling direction of the autonomous traveling body 1 by at least one of the obstacle detector 7 and the object detection sensor 15. When the obstacle OB has not been detected ("No" in step S3), the autonomous movement operation proceeds to step S12.

In step S12, the traveling controller 135 determines the continuation of the autonomous movement at a normal speed. The normal speed of the autonomous movement is, for example, the maximum speed of the autonomous traveling body 1. When the moving speed is associated with each passing point of the traveling schedule SC, the normal speed is the associated moving speed.

On the other hand, when the obstacle OB has been detected in the traveling direction of the autonomous traveling body 1 ("Yes" in step S3), the autonomous movement operation proceeds to step S4. In step S4, the traveling controller 135 determines whether or not at least a part of the detected obstacle OB is included in the obstacle detection area R. This determination is performed as follows.

The traveling controller 135 first specifies the position of the obstacle OB in the coordinate system defining the environmental map data M1. For example, the traveling controller 135 can specify the position of the obstacle OB in the coordinate system based on the distance between the vehicle body 3 and the obstacle OB obtained by at least one of the obstacle detector 7 and the object detection sensor 15, a direction in which the obstacle OB is present as viewed from the vehicle body 3, and the current self-position. Next, the traveling controller 135 disposes the model of the detected obstacle OB at the specified position on the coordinate system defining the environmental map data M1.

After disposing the model of the obstacle OB on the coordinate system defining the environmental map data M1, the traveling controller 135 disposes the obstacle detection area R at a position corresponding to the current self-position on the same coordinate system.

Thereafter, when at least a part of the obstacle OB disposed in the coordinate system defining the environmental map data M1 is included anywhere in the obstacle detection area R disposed on the same coordinate system, the traveling controller 135 determines that at least a part of the detected obstacle OB is included in the obstacle detection area R.

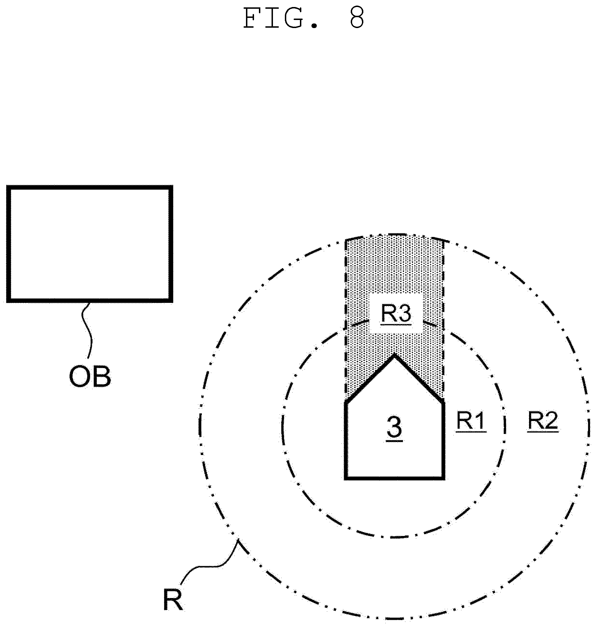

As a result of the above determination, as illustrated in FIG. 8, when it is determined that the detected obstacle OB is not included in the obstacle detection area R ("No" in step S4), the traveling controller 135 determines that the obstacle OB is not present around the vehicle body 3. In this case, in step S5, the traveling controller 135 determines whether or not the detected obstacle OB is present on a route (referred to as a future route) on which the autonomous traveling body 1 moves in the future in the traveling schedule SC (autonomous movement route).

Specifically, the determination in step S5 as to whether or not the detected obstacle OB is present on the future route is performed as follows.

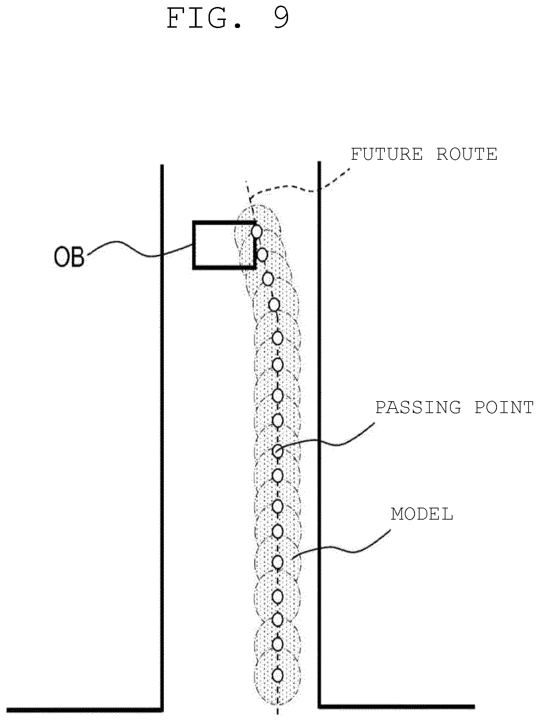

First, the traveling controller 135 specifies, as a future route, a route connecting the current self-position, a target passing point to which the next movement is made among the passing points recorded in the traveling schedule SC, and passing points after the target passing point. Thereafter, as illustrated in FIG. 9, the traveling controller 135 disposes the model of the vehicle body 3 at each passing point of the specified future route. As illustrated in FIG. 9, when a part of the model of the vehicle body 3 disposed on the future route interferes with the obstacle OB, the traveling controller 135 determines that the obstacle OB is present on the future route. FIG. 9 is a diagram schematically illustrating a method for determining whether or not the obstacle OB is present on the future route.

The model of the vehicle body 3 used in the determination in step S5 may be the same as the model (i.e., the model defined as the area obtained by adding the predetermined margin to the vehicle body 3) used when the autonomous movement route is planned in step S1, or may be a different model (e.g., a model in which the size of the predetermined margin is changed).

When it is determined that the obstacle OB is present on the future route ("Yes" in step S5), the traveling controller 135 determines that the vehicle will collide with the obstacle OB in the future when the vehicle keeps moving autonomously. In this case, the traveling route planning part 137 attempts to plan an avoidance route for avoiding the obstacle OB on the future route without interfering with the obstacle OB and making a sudden turn (step S6).

The obstacle detector 7 and the object detection sensor 15 can also detect an obstacle OB present far from the vehicle body 3 due to its characteristics. That is, the obstacle detector 7 and the object detection sensor 15 can detect an obstacle OB present at a predetermined point on the future autonomous movement route (future route) where the vehicle body 3 will move. In the present embodiment, when an obstacle OB at a position relatively far from the vehicle body 3 is detected, as described above, an avoidance route enabling safe avoidance of the obstacle OB detected at a distance is planned. As a result, for example, it is possible to prevent the autonomous traveling body 1 from suddenly changing its direction and falling down or the like in order to avoid the detected obstacle OB.

When an appropriate avoidance route can be planned ("Yes" in step S6), the autonomous movement operation proceeds to step S12. That is, the traveling controller 135 determines the movement along the avoidance route at the normal speed. As a result, after the obstacle OB is safely avoided at the normal speed, the movement can be continued along the remaining autonomous movement route.

On the other hand, for example, when an appropriate avoidance route cannot be planned because a part that interferes with the obstacle OB or a sudden direction change is included in the planned avoidance route ("No" in step S6), the autonomous movement operation proceeds to step S7. In step S7, the traveling controller 135 stops the vehicle body 3. In this way, when an appropriate avoidance route for avoiding the obstacle OB on the future route cannot be planned, and there is a high risk of colliding with the obstacle OB, the autonomous movement of the autonomous traveling body 1 can be stopped.

On the other hand, when it is determined that the obstacle OB is not present on the future route ("No" in step S5), the traveling controller 135 determines that the detected obstacle OB and the vehicle body 3 are sufficiently away from each other, and the autonomous traveling body 1 can safely pass through the obstacle OB even when the autonomous traveling body 1 keeps moving autonomously. In this case, the autonomous movement operation proceeds to step S12. In step S12, the traveling controller 135 determines the continuation of the autonomous movement at a normal speed. That is, the autonomous traveling body 1 continues to keep moving without change in accordance with the traveling schedule SC.

Even though it is determined in step S5 that the obstacle OB is not present around the vehicle body 3 at a predetermined point on the future route, thereafter (e.g., after a lapse of a few seconds), when the obstacle OB is detected around the vehicle body 3 by one of the obstacle detector 7 and the object detection sensor 15 at the time of determination that the vehicle body 3 has reached the predetermined point, the traveling controller 135 stops the vehicle body 3 when at least a part of the obstacle OB is included in the stop area R3.

On the other hand, when the obstacle OB is present around the vehicle body 3 at the time of determination that the vehicle body 3 has reached the predetermined point, and at least a part of the obstacle OB is included in the first deceleration area R1 or the second deceleration area R2, the traveling controller 135 reduces the traveling speed of the vehicle body 3 to be lower than the normal speed. That is, the traveling controller 135 reduces the traveling speed of the vehicle body 3 and moves the vehicle body 3 in accordance with the traveling schedule SC.

As described above, even though it is determined in step S5 that the obstacle OB is not present at the predetermined point (e.g., a point where the vehicle is scheduled to arrive after a few seconds) on the future route, thereafter, when the obstacle OB is unexpectedly present at the time of arrival of the vehicle body 3 at the predetermined point, the traveling controller 135 determines whether to stop the vehicle body 3 or decelerate and continuously move the vehicle body 3 based on the positional relationship between the vehicle body 3 and the obstacle OB. Thereby, the vehicle body 3 is stopped only when the risk of colliding with the obstacle OB is high, and the movement of the vehicle body 3 can be continued when the vehicle body 3 merely comes close to the obstacle and the risk of colliding with the obstacle OB is low.

The description returns to the flowchart of FIG. 7. In step S4 described above, when it is determined that the obstacle OB detected in step S3 is included in the obstacle detection area R ("Yes" in step S4), the traveling controller 135 further determines in which area of the obstacle detection area R the obstacle OB is included. This determination is specifically performed as follows.

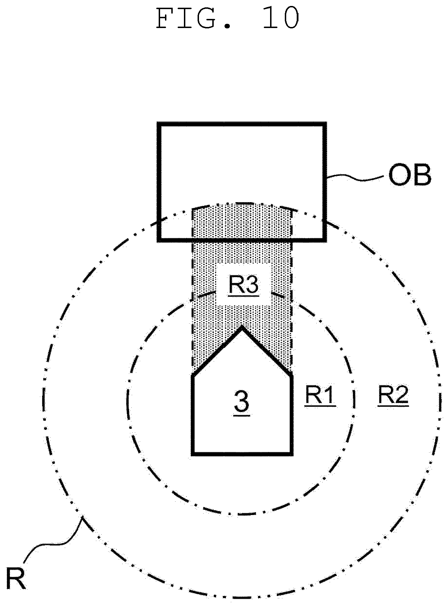

First, in step S8, the traveling controller 135 determines whether or not at least a part of the obstacle OB is included in the stop area R3. As illustrated in FIG. 10, when it is determined that at least a part of the obstacle OB is included in the stop area R3, the traveling controller 135 determines that the obstacle OB is present in front of the vehicle body 3 in the traveling direction, and determines that the autonomous traveling body 1 will collide with the obstacle OB when the autonomous traveling body 1 keeps moving without change. FIG. 10 is a diagram illustrating an example of a case where the obstacle is included in the stop area.

As illustrated in FIG. 10, when at least a part of the obstacle OB is included in both the stop area R3 and the second deceleration area R2, it is determined that at least a part of the obstacle OB is included in the stop area R3. The determination is similarly made when at least a part of the obstacle OB is included in both the stop area R3 and the first deceleration area R1.

When it is determined that at least a part of the obstacle OB is included in the stop area R3 ("Yes" in step S8), the autonomous movement operation proceeds to step S7. In step S7, the traveling controller 135 stops the vehicle body 3 in order to avoid a collision between the detected obstacle OB and the vehicle body 3. In this way, when the autonomous traveling body 1 having autonomously moved out of the autonomous movement route unexpectedly approaches the obstacle OB, and there is a high risk that the autonomous traveling body 1 will collide with the obstacle OB if the autonomous traveling body 1 keeps moving autonomously, the autonomous movement of the autonomous traveling body 1 can be stopped.

On the other hand, when it is determined that at least a part of the obstacle OB is not included in the stop area R3 ("No" in step S8), the traveling controller 135 determines that at least a part of the obstacle OB is included only in the deceleration area.

When at least a part of the obstacle OB is included only in the deceleration area, the traveling controller 135 determines in step S9 whether at least a part of the obstacle OB is included in the first deceleration area R1 or the second deceleration area R2 in the deceleration area.

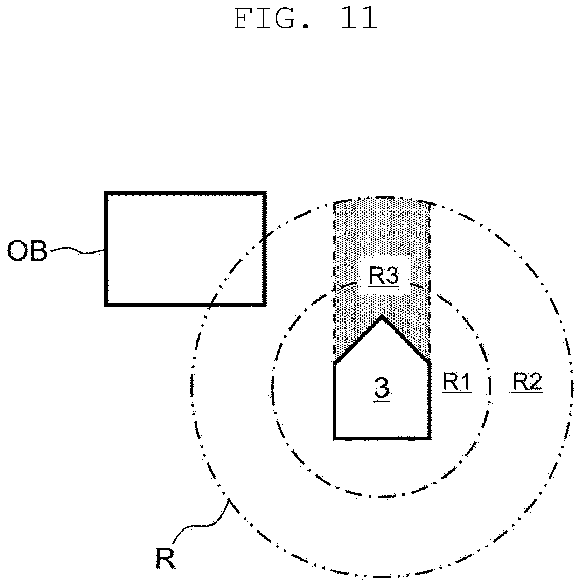

As illustrated in FIG. 11, when it is determined that at least a part of the obstacle OB is included in the second deceleration area R2 ("second deceleration area" in step S9), the traveling controller 135 determines that the obstacle OB and the vehicle body 3 will come close to each other with a certain distance although the obstacle OB is not present in front of the vehicle body 3. In this case, the traveling controller 135 determines that the possibility of colliding with the obstacle OB is low even when the autonomous traveling body 1 keeps moving without change, and the autonomous movement operation proceeds to step S10. FIG. 11 is a diagram illustrating an example of a case where the obstacle information is included in the second deceleration area.

In step S10, the traveling controller 135 reduces the traveling speed of the autonomous traveling body 1 to a first speed lower than the normal speed and then continues the autonomous movement.

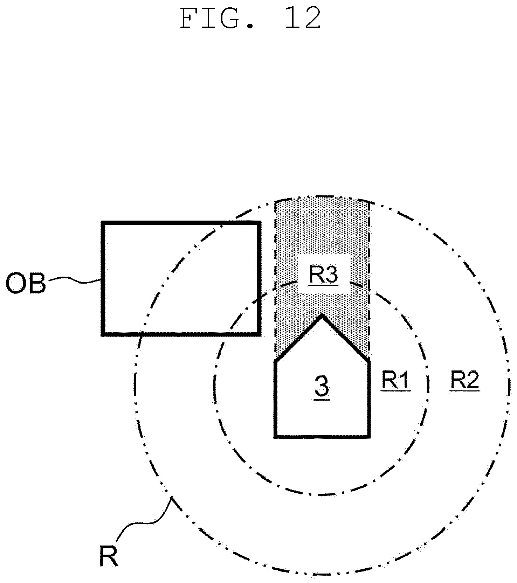

On the other hand, as illustrated in FIG. 12, when it is determined that at least a part of the obstacle OB is included in the first deceleration area R1 ("first deceleration area" in step S9), the traveling controller 135 determines that the obstacle OB is closest to the vehicle body 3 although the obstacle OB is not present in front of the vehicle body 3. In this case, although the obstacle OB and the vehicle body 3 are closest to each other, there is a low possibility that the autonomous traveling body 1 will collide with the obstacle OB even when the autonomous traveling body 1 keeps moving without change, and hence the traveling controller 135 determines that the autonomous traveling body 1 is to be moved safely, and the autonomous movement operation proceeds to step S11. FIG. 12 is a diagram illustrating an example of a case where the obstacle information is included in a first deceleration area.

As illustrated in FIG. 12, when at least a part of the obstacle OB is included in both the first deceleration area R1 and the second deceleration area R2, it is determined that at least a part of the obstacle OB is included in the first deceleration area R1.

In step S11, the traveling controller 135 reduces the traveling speed of the autonomous traveling body 1 to a second speed lower than the first speed and then continues the autonomous movement.

After the execution of steps S2 to S12, when the autonomous traveling body 1 has not reached the last passing point (movement end position) of the traveling schedule SC, and the continuation of the autonomous movement is determined ("Yes" in step S13), the traveling controller 135 performs steps S2 to S12 again.

On the other hand, when the autonomous traveling body 1 has not reached the last passing point of the traveling schedule SC, but it is determined in step S7 to stop the autonomous traveling body 1, or when the autonomous traveling body 1 reaches the last passing point (movement end position) of the traveling schedule SC ("No" in step S13), the traveling controller 135 stops the autonomous traveling body 1 and ends the autonomous movement.

By performing steps S1 to S13 described above, the autonomous traveling body 1 generates the traveling schedule SC for safely avoiding the obstacle OB indicated in the environmental map data M1 and then starts the autonomous movement. Even when the obstacle OB is detected during the autonomous movement, the autonomous traveling body 1 can decelerate and continue the autonomous traveling.

That is, the autonomous traveling body 1 monitors the presence or absence of the obstacle OB even during the autonomous movement in consideration of the occurrence of at least one of a case where a new obstacle OB that is not present in the environmental map data M1 is detected during the autonomous movement, and a case where the autonomous traveling body 1 deviates from the planned autonomous movement route, and hence the autonomous traveling body 1 unexpectedly approaches and collides with the obstacle OB.

When the obstacle OB is detected during the autonomous movement, the traveling controller 135 determines whether the autonomous traveling body 1 merely approaches the obstacle OB and the risk of colliding with the obstacle OB is low, or whether the risk of colliding with the obstacle OB is high because the obstacle OB is present in front of the autonomous traveling body 1 in the traveling direction. Based on the determination result, the traveling controller 135 determines the stoppage of the autonomous movement of the autonomous traveling body 1 when the obstacle OB is present in front of the autonomous traveling body 1 in the traveling direction, determines the deceleration and the continuation of the autonomous movement when the obstacle OB is not present in front of the autonomous traveling body 1 in the traveling direction and the autonomous traveling controller is merely close to the obstacle OB, and determines the continuation of the autonomous movement at the normal speed when the autonomous traveling body 1 is sufficiently away from the obstacle OB.

Thereby, the autonomous traveling body 1 is stopped only when the risk of the vehicle body 3 colliding with the obstacle OB during the autonomous movement is high, and the movement can be continued in other cases, that is, when the vehicle body 3 merely comes close to the obstacle and the risk of colliding with the obstacle OB is low.

In addition, the traveling controller 135 can reduce the traveling speed of the vehicle body 3 more as the distance between the vehicle body 3 and the obstacle OB is shorter. As a result, the autonomous traveling body 1 can be moved safely.

### (6) Alternative Embodiment

In the above description, in the obstacle detection area R, the stop area R3 has overlapped with a part of the deceleration area (first deceleration area R1, second deceleration area R2). However, the present invention is not limited thereto, and in the obstacle detection area R, the stop area R3 may be defined as an area outside the deceleration area that does not overlap with the deceleration area. In this case, the traveling controller 135 can determine whether to stop or continue the autonomous movement of the autonomous traveling body 1 depending on whether at least a part of the obstacle OB detected during the autonomous movement is included in the deceleration area or included in the stop area R3.

Specifically, the traveling controller 135 stops the vehicle body 3 when at least a part of the obstacle OB detected by the obstacle detector 7 is included in the stop area R3. On the other hand, when at least a part of the obstacle OB detected by the obstacle detector 7 is included in the first deceleration area R1 or the second deceleration area R2, specifically, the traveling controller 135 decelerates the traveling speed of the vehicle body 3.

### 2. Characteristics of embodiment

The above embodiment can be described as follows.

An autonomous traveling body (e.g., autonomous traveling body 1) includes a vehicle body (e.g., vehicle body 3), a traveling part (e.g., traveling part 5), an obstacle detector (e.g., obstacle detector 7), a traveling controller (e.g., traveling controller 135), and a storage part (e.g., storage part 131).

The traveling part causes the vehicle body to travel. The obstacle detector detects an obstacle (e.g., obstacle OB) around the vehicle body. The traveling controller controls the traveling part based on a detection result of the obstacle by the obstacle detector. The storage part stores an obstacle detection area (e.g., obstacle detection area R) set around the vehicle body. The obstacle detection area includes a stop area (e.g., stop area R3) having a predetermined width with the traveling direction of the vehicle body as an axis, and a deceleration area (e.g., first deceleration area R1 and second deceleration area R2) excluding the stop area.

When at least a part of the obstacle detected by the obstacle detector is included in the stop area, the traveling controller stops the vehicle body.

On the other hand, when at least a part of the obstacle detected by the obstacle detector is included in the deceleration area, the traveling controller reduces the traveling speed of the vehicle body.

In the autonomous traveling body described above, the stop area and the deceleration area excluding the stop area are set in an obstacle detection area used for determining whether or not the obstacle detected by an obstacle detector is close to the vehicle body.

The stop area is defined as an area having a predetermined width with the traveling direction of the vehicle body as an axis. That is, the fact that at least a part of the obstacle is included in the stop area means that the obstacle is present in front of the autonomous traveling body in the traveling direction. In this case, when the autonomous traveling body keeps moving without change, the autonomous traveling body will collide with the obstacle, and hence the traveling controller performs control to stop the vehicle body.

On the other hand, the fact that at least a part of the obstacle is included in the deceleration area means that the obstacle is not present in front of the autonomous traveling body in the traveling direction. In this case, even when the autonomous traveling body keeps moving without change, the autonomous traveling body will merely come close to the obstacle and will not collide with the obstacle, and hence the traveling controller performs control for reducing the traveling speed of the vehicle body.

As described above, the autonomous traveling body stops only when having a high risk of colliding with the obstacle, and can continue to move when merely coming close to the obstacle and having a low risk of colliding with the obstacle.

### 3. Other Embodiments

Although one embodiment of the present invention has been described above, the present invention is not limited to the above embodiment, and various changes can be made in a range not deviating from the gist of the invention. In particular, a plurality of embodiments and alternative embodiments described in the present specification can be combined in a freely selected manner as required.
(A) The autonomous traveling body 1 may be a mobile body different from the shelf check robot described above. For example, the autonomous traveling body 1 may be a mobile body that performs various operations while autonomously moving, such as an advertisement robot and a cleaning robot. The autonomous traveling body 1 may be an autonomous movement unit. In this case, an autonomous traveling body having a specific function can be realized by combining the autonomous traveling body 1, which is an autonomous movement unit, and various devices for realizing various functions.
(B) The deceleration area is not limited to a case where the deceleration area includes only two layers of the first deceleration area R1 and the second deceleration area R2. For example, the deceleration area may be defined as an area of two or more multilayers. Alternatively, for example, when at least a part of the obstacle OB is included in the deceleration area, the distance between the vehicle body 3 and the obstacle OB may be calculated, and the degree of deceleration may be increased as the distance is smaller. This enables multistage speed adjustment in accordance with the distance between the vehicle body 3 and the obstacle OB.
(C) The sizes and shapes of the obstacle detection area R, the first deceleration area R1, the second deceleration area R2, and the stop area R3 can be appropriately determined in accordance with the situation of the movement area A, the configuration of the autonomous traveling body 1, and the like.
(D) When it is determined whether or not the obstacle OB is present on the future route, the obstacle detection area R may be used instead of using the model of the vehicle body 3. In this case, the autonomous movement policy (e.g., whether to stop the autonomous movement in the vicinity of the obstacle OB present on the future route or to perform deceleration in the vicinity of the obstacle OB) in the future route may be determined in accordance with which area of the obstacle detection area R the obstacle OB on the future route is included.

The present invention can be widely applied to an autonomous traveling body that autonomously moves in a predetermined movement area.

While preferred embodiments of the present invention have been described above, it is to be understood that variations and modifications will be apparent to those skilled in the art without departing from the scope of the present invention. The scope of the present invention, therefore, is to be determined solely by the following claims.

## Claims

1. An autonomous traveling body (1) comprising:
a vehicle body (3);
a traveling part (5) that is configured to cause the vehicle body (3) to travel;
an obstacle detector (7) that is configured to detect an obstacle (OB) around the vehicle body (3);
a traveling controller (135) that is configured to control the traveling part (5) based on a detection result of the obstacle (OB) by the obstacle detector (7); and
a storage part (131) that stores an obstacle detection area (R) set around the vehicle body (3),
wherein the obstacle detection area (R) includes a stop area (R3) having a predetermined width with a traveling direction of the vehicle body (3) as an axis, and a deceleration area (R1, R2) excluding the stop area (R3).

2. The autonomous traveling body (1) according to claim 1, wherein
the traveling controller (135) is configured to
stop the vehicle body (3) when at least a part of the obstacle (OB) detected by the obstacle detector (7) is included in the stop area (R3), and
reduce a traveling speed of the vehicle body (3) when at least a part of the obstacle (OB) detected by the obstacle detector (7) is included only in the deceleration area (R1, R2).

3. The autonomous traveling body (1) according to claim 1, wherein the traveling controller (135) is configured to stop the vehicle body (3) when at least a part of the obstacle (OB) detected by the obstacle detector (7) is included in both the stop area (R3) and the deceleration area (R1, R2).

4. The autonomous traveling body (1) according to claim 1, wherein
the traveling controller (135) is configured to
reduce a traveling speed of the vehicle body (3) when at least a part of the obstacle (OB) detected by the obstacle detector (7) is included in the obstacle detection area (R), and
stop the vehicle body (3) when at least a part of the obstacle (OB) detected by the obstacle detector (7) is located within a predetermined width with a traveling direction of the vehicle body (3) as an axis.

5. The autonomous traveling body (1) according to claim 1, wherein
the deceleration area (R1, R2) and the stop area (R3) have a non-overlapping positional relationship, and
the traveling controller (135) is configured to
stop the vehicle body (3) when at least a part of the obstacle (OB) detected by the obstacle detector (7) is included in the stop area (R3), and
reduce a traveling speed of the vehicle body (3) when at least a part of the obstacle (OB) detected by the obstacle detector (7) is included only in the deceleration area (R1, R2).

6. The autonomous traveling body (1) according to claim 1, wherein
the traveling controller (135) is configured to plan an autonomous movement route from a movement start position to a movement end position in the predetermined movement area so as to avoid an obstacle (OB) present between the movement start position and the movement end position with a predetermined margin between the obstacle (OB) and the vehicle body (3),
during autonomous movement in which autonomous movement is performed in accordance with the autonomous movement route while the obstacle detector (7) is configured to detect the obstacle (OB) present around the vehicle body (3),
even though it is determined that no obstacle (OB) is present around the vehicle body (3) at a predetermined point on a future autonomous movement route to be moved, when at least a part of the obstacle (OB) present around the vehicle body (3) is included in a predetermined width area within a predetermined width with a traveling direction of the vehicle body (3) as an axis in the obstacle detection area (R) at a time of determination that the vehicle body (3) arrives at the predetermined point, the traveling controller is configured to stop the vehicle body (3), and
when at least a part of an obstacle (OB) present around the vehicle body (3) is included in an area excluding the predetermined width area in the obstacle detection area (R) at a time of determination that the vehicle body (3) arrives at the predetermined point, the traveling controller is configured to reduce a traveling speed of the vehicle body.

7. The autonomous traveling body (1) according to any one of claims 1 to 6, wherein the traveling controller (135) is configured to reduce the traveling speed of the vehicle body (3) more as the obstacle (OB) detected by the obstacle detector (7) is closer to the vehicle body (3) in the deceleration area (R1, R2).

8. The autonomous traveling body (1) according to any one of claims 1 to 7, wherein the predetermined width is equivalent to a width of the vehicle body (3).
